# EUROPEAN PATENT APPLICATION

(11) **EP 4 542 908 A1**
(43) Date of publication of application: **23.04.2025**
(21) Application number: 23838695.7
(22) Date of filing: 28.06.2023
(51) Int. Cl.: H04L 5/00, H04W 4/40

(54) **POSITIONING REFERENCE SIGNAL SENDING METHOD AND APPARATUS, AND TERMINAL DEVICE**

(30) Priority: 15.07.2022 CN 202210836614
(71) Applicant: CICT Connected and Intelligent Technologies Co., Ltd., Chongqing 400041 (CN)
(72) Inventor: ZHENG, Shilei, Chongqing 400000 (CN); ZHAO, Rui, Chongqing 400000 (CN); XI, Yifan, Chongqing 400000 (CN)
(74) Representative: HGF
(86) International application number: PCT/CN2023/103273
(87) International publication number: WO 2024/012201

(57) **Abstract**

The present disclosure provides a method and apparatus for sending a positioning reference signal, and a terminal device, which are applied to the technical field of communications. The method for sending a positioning reference signal comprises: sending a Physical Sidelink Control Channel (PSCCH) and a Physical Sidelink Shared Channel (PSSCH) to a second device in a first resource pool; wherein Sidelink Control Information (SCI) carried on the PSCCH or the PSSCH includes first indication information, and the first indication information is used for indicating related information of a Sidelink Positioning Reference Signal (SL-PRS).

## Description

### Cross-Reference to Related Application

The present disclosure claims priority to Chinese Patent Application No. 202210836614.8 filed on July 15, 2022, which is incorporated herein by reference in its entirety.

### Technical Field

The present disclosure relates to the technical field of communications, and in particular, to a method and apparatus for sending a positioning reference signal, and a terminal device.

### Background

The 3rd Generation Partnership Project Release 16 (3GPP Release 16) has developed research and standardization of the uplink and downlink positioning (NR positioning) in a cellular network. Within the coverage of the cellular network, a base station sends a cell-specific downlink Positioning Reference Signal (PRS), a terminal sends an uplink Sounding Reference Signal (SRS) for positioning, and accordingly, the terminal may measure a Reference Signal Time Difference (RSTD), measure Reference Signal Received Power (RSRP) of a Downlink (DL) PRS, or measure a time difference between receiving the DL PRS and sending out the SRS by the terminal; the base station may measure a Relative Time of Arrival (RTOA) of the uplink reference signal, RSRP of the SRS, a time difference and an angle measurement value of the base station (gNB) receiving the SRS and the gNB sending the DL PRS, and process the measurement value to calculate the position of the terminal (UE).

The work related to the study and standardization of the Sidelink (SL) positioning is actively expanding, but the sidelink is different from the New Radio (NR) downlink and uplink, the main application scenarios of the sidelink include indoor, outdoor, tunnel areas, etc., and it is also necessary for the outdoor and tunnel areas to support positioning services with a moving speed up to 250 km/h. Therefore, it is necessary to redesign corresponding positioning measurement flow and resource allocation method between UEs according to the characteristics of the resources and physical layer structures thereof, so as to adapt to the sidelink positioning technology.

In the related art, an SL-PRS is not introduced in the sidelink communication, nor has there been a design for the related positioning interaction process. If some reference signals in the related art are reused as an SL-PRS, the primary issues are precision and flexibility, and a Position Sensitive Detector (PSD) is also affected by the reuse of other signals.

### Summary

Embodiments of the present disclosure provide a method and apparatus for sending a positioning reference signal, and a terminal device, so as to solve the problem in the related art that related information of a Sidelink Positioning Reference Signal (SL-PRS) does not exist in the sidelink communication.

In order to solve the technical problem above, embodiments of the present disclosure provide the following technical solutions:
according to a first aspect, embodiments of the present disclosure provide a method for sending a positioning reference signal, applied to a first device, the method comprising:
in a first resource pool, sending a Physical Sidelink Control Channel (PSCCH) and a Physical Sidelink Shared Channel (PSSCH) to a second device; wherein, Sidelink Control Information (SCI) carried on the PSCCH or the PSSCH includes first indication information, and the first indication information is used for indicating related information of an SL-PRS.

According to a second aspect, embodiments of the present disclosure further provide a method for sending a positioning reference signal, applied to a second device, the method comprising:
in a first resource pool, receiving a PSCCH and a PSSCH sent by a first device; wherein SCI carried on the PSCCH or the PSSCH includes first indication information, and the first indication information is used for indicating related information of an SL-PRS.

According to a third aspect, embodiments of the present disclosure further provide an apparatus for sending a positioning reference signal, applied to a first device, the apparatus comprising:
a sending component, configured to send a PSCCH and a PSSCH to a second device in a first resource pool; wherein SCI carried on the PSCCH or the PSSCH includes first indication information, and the first indication information is used for indicating related information of an SL-PRS.

According to a fourth aspect, embodiments of the present disclosure further provide an apparatus for sending a positioning reference signal, applied to a second device, the apparatus comprising:
a receiving component, configured to receive, in a first resource pool, a PSCCH and a PSSCH sent by a first device; wherein SCI carried on the PSCCH or the PSSCH includes first indication information, and the first indication information is used for indicating related information of an SL-PRS.

According to a fifth aspect, embodiments of the present disclosure further provide a terminal device, wherein the terminal device is a first device, and comprises: a processor, a memory, and a program stored in the memory and capable of running on the processor; the program, when executed by the processor, implements the steps of the method for sending a positioning reference signal according to any one embodiment in the first aspect.

According to a sixth aspect, embodiments of the present disclosure further provide a terminal device, wherein the terminal device is a second device, and comprises: a processor, a memory, and a program stored in the memory and capable of running on the processor; the program, when executed by the processor, implements the steps of the method for sending a positioning reference signal according to any one embodiment in the second aspect.

According to a seventh aspect, embodiments of the present disclosure further provide a readable storage medium, wherein the readable storage medium stores a program which, when executed by a processor, implements the steps of the method for sending a positioning reference signal according to any one embodiment in the first aspect, or the steps of the method for sending a positioning reference signal according to any one embodiment in the second aspect.

Beneficial effects of the present disclosure lie in that:
in the solution of the present disclosure, a first device sends a PSCCH and a PSSCH to a second device in a first resource pool, and adds first indication information into SCI carried on the PSCCH or the PSSCH, which is used for indicating related information of an SL-PRS, so as to introduce related information of the SL-PRS in the sidelink communication in the related art.

### Brief Description of the Drawings

Fig. 1 is a schematic structural diagram of a Rel-16 sidelink channel provided according to embodiments of the present disclosure;
Fig. 2 is a first schematic structural diagram of a resource block provided according to embodiments of the present disclosure;
Fig. 3 is a second schematic structural diagram of the resource block provided according to embodiments of the present disclosure;
Fig. 4 is a resource selection timing diagram provided according to embodiments of the present disclosure;
Fig. 5 is a flowchart of a method for sending a positioning reference signal applied to a first device provided according to embodiments of the present disclosure;
Fig. 6 is a third schematic structural diagram of the resource block provided according to embodiments of the present disclosure;
Fig. 7 is a schematic structural mapping diagram of an SL-PRS provided according to embodiments of the present disclosure;
Fig. 8 is a flowchart of a method for sending a positioning reference signal applied to a second device provided according to embodiments of the present disclosure;
Fig. 9 is a schematic structural diagram of an apparatus for sending a positioning reference signal applied to a first device provided according to embodiments of the present disclosure;
Fig. 10 is a schematic structural diagram of an apparatus for sending a positioning reference signal applied to a second device provided according to embodiments of the present disclosure; and
Fig. 11 is a schematic structural diagram of a terminal device provided according to embodiments of the present disclosure.

### Detailed Description of the Embodiments

In order to make objects, technical solutions and advantages of the present disclosure more apparent, the present disclosure will be described in detail below in conjunction with the accompanying drawings and specific embodiments.

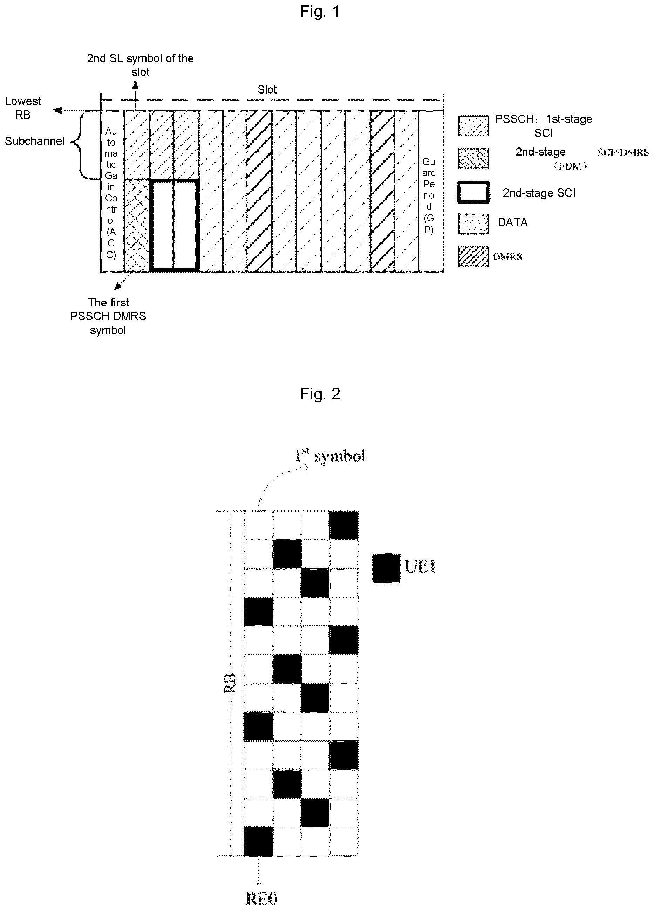

Before describing specific embodiments, the following description is first made:
in the Rel-16 NR sidelink, a physical sidelink control channel (PSCCH) and a physical sidelink shared channel (PSSCH) use the manners of Time Division Multiplexing (TDM) and Frequency Division Multiplexing (FDM). As shown in Fig. 1, the Rel-16 sidelink further introduces 2nd-stage SCI, which is carried by the PSSCH together with data; and a 1st-stage SCI, which is carried by the PSCCH, and is used for indicating information such as a time-frequency resource location, priority, period, and corresponding Modulation and Coding Scheme (MCS) occupied by a current Transport Block (TB); and does not introduce a corresponding sidelink PRS.

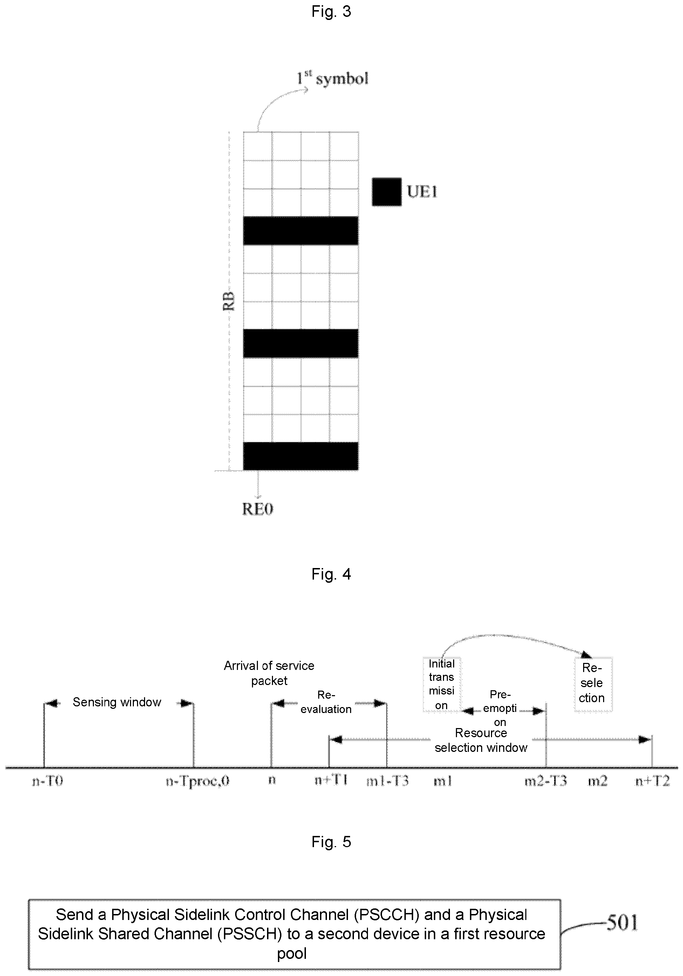

For illustration of a PRS frequency domain pattern, the frequency domain pattern is information such as a comb size used by the PRS, and a start position of the PRS in each Resource Block (RB) on each time domain symbol; specifically, the frequency domain pattern may comprise, but is not limited to, a comb size, a start mapping Resource Element (RE) position in each RB of a start symbol, and a mapping comb offset of an RE granularity on each symbol. In cases where it is mapped repeatedly on each symbol, only the RE mapping position in each RB in the frequency domain is required. As shown in Figs. 2 and 3, for a UE1, the comb size=4, the start mapping RE position in each RB of the start symbol is an index=0, and the RE comb offset = {0,2,1,3} in each symbol.

When a plurality of UEs share the same PRS dedicated resource, in order to ensure the orthogonality of the PRS sent between different UEs, the mapping positions of the PRS resources of various UEs for sending and the used OCC (or CS) may be associated with the user identifier information (source ID, etc.) of the UEs for sending or receiving or the mapping resource position of PRS request signaling, or configured by a network.

The PRS sequence may be a Gold sequence (corresponding to the orthogonal cover code (OCC)) or a Zadoff-Chu (ZC) sequence (corresponding to the cyclic shift (CS)).

For Rel-16 NR positioning, two types of reference signals for positioning are mainly introduced: a downlink positioning reference signal (PRS) and an uplink sensing reference signal (SRS) for positioning.

The Gold sequence is used in the downlink PRS, and designs such as PRS resources, a PRS resource set and a PRS positioning frequency layer are introduced. The PRS resource may be a comb structure in the frequency domain, and may occupy a plurality of consecutive OFDM symbols in the time domain. A single port is used, the maximum bandwidth cannot exceed 272 PRBs and the minimum bandwidth cannot be lower than 24 PRBs.

The uplink SRS for positioning uses a ZC sequence, and may continuously occupy a plurality of orthogonal frequency division multiplexing (OFDM) symbols in the time domain, and also is a comb structure in the frequency domain, so as to facilitate supporting frequency division multiplexing of a plurality of uplink SRS for positioning (SRS-POS) on the same OFDM symbol. A single port is used, compared with transmission via two ports, a single port has the advantage of improving the power spectral density of the SRS-POS at a base station receiver side, thereby improving the coverage area and quality of the SRS-POS. The maximum bandwidth supported on the frequency domain is 272 PRBs, and the minimum bandwidth is 4 PRBs. The SRS-POS supports configuration of three types of resources: periodic, semi-persistent and aperiodic.

The Release 16 NR positioning supports "Radio Access Technology (RAT)-independent" positioning technology, including Global Navigation Satellite System (GNSS), atmospheric pressure sensor positioning, Wireless Local Area Network (WLAN) positioning, inertial navigation positioning, Bluetooth positioning, and terrestrial beacon system positioning.

The Release 16 NR positioning studies "RAT-dependent" and hybrid positioning techniques, so as to improve positioning accuracy. The main solution is that: a gNB periodically sends a downlink PRS, and supports Downlink Time Difference of Arrival (DL-TDOA), Downlink Angle-of-Departure (DL-AoD) measurement, and Enhanced Cell Identification (E-CID) detection; a terminal sends an uplink SRS for positioning, supports Uplink Time Difference of Arrival (UL-TDOA) and Uplink Angle of Arrival (UL-AoA) measurement, and supports the combination of uplink and downlink for Round Trip Time (RTT) measurement, or for positioning on the basis of a multi-Round-Trip Time (multi-RTT) method.

The whole positioning process of the NR/LTE positioning is controlled and scheduled by a base station and a Location Management Function (LMF).

New Radio-Vehicle to Everything (NR-V2X) uses resource exclusion technology based on a sensing and Reference Signal Received Power (RSRP) for information exchange. As shown in Fig. 4, in the sensing window, the UE continues to receive, decode and measure the RSRP. When a service packet arrives at time n, the resource selection process of the UE triggered by the higher-layer signaling as follows:
(1) the candidate single-slot resource R_{x,y} is consecutive x+j subchannels on the t_{y} slot within the time period [n+T₁, n+T₂], as shown in Fig. 4. Wherein 0≤T₁≤T_{proc,1}, T_{proc,1} represents a sending processing delay of the UE (comprising a sensing-based resource selection time, a sending preparation time of a PSCCH and a sending preparation time of an SL-PRS), the value may be {3,5,9,17} physical slots, which respectively correspond to the Sub-Carrier Space (SCS) {15,30,60,120} kHz; T₂ₘᵢₙ≤T₂≤remaining PDB, wherein T₂ₘᵢₙ is the minimum value of T₂ configured by a higher-layer parameter t*2min_SelectionWindow*, and remaining PDB is a residual delay budget of the data packet. The total number of candidate single-slot resources is Mₜₒₜₐₗ. (2) The UE continuously monitors a slot in a sensing window [n-T₀, n-T_{proc,0}), and performs PSCCH and SL-PRS decoding and SL-PRS or PSCCH Reference Signal Received Power (PSCCH-RSRP) measurement. T₀ is a sensing window length configured by a higher layer, T_{proc,0} is the time when the UE processes a previous sensing result, and the value may be {1,1,2,4} physical slots, which respectively correspond to SCS {15,30,60,120) kHz. (3) Th(pᵢ, pⱼ) indicates the i^{th} RSRP domain in *sl-ThresSL-PRS-RSRP-List-r16,* wherein i=pᵢ+(pⱼ-1)*8, pᵢ represents the priority indicated in the received SCI, pⱼ represents the priority of the transmission of a UE for sending, pⱼ=prio_{TX}. (4) S_{A} is initialized as the set of all candidate single-slot resources. (5) Exclude candidate slots corresponding to skip slots, which may also be understood as excluding candidate slots corresponding to not monitored slots, wherein the not monitored slots are slots (such as y) that cannot be sensed due to a half-duplex influence, and for all cycles (such as 20 ms, 50 ms, and 100 ms) configured by the system, all candidate slots (i.e. the slots which fall within the selection window in y, y+20*2^{µ}, y+40*2^{µ}, y+50*2^{µ}, y+60*2^{µ}, y+80*2^{µ}, y+100*2^{µ}, etc.) of subsequent corresponding positions are excluded. (6) Exclude candidate single-slot resources that meet the following two conditions: a, an RSRP measurement value indicated by the received Sidelink Control Information (SCI) is higher than Th(prio_{RX}, prio_{TX}); and b, the reserved resources which are indicated by the received SCI may partially or completely overlap with a Transport Block (TB) sent on the candidate resource y or a TB sent on subsequent candidate resources on y+x*Pₛₜₑₚ*2^{µ}, wherein Pₛₜₑₚ is resource reservation periods (being converted into a logical slot), x is an integer, and represents the number of subsequent periods, and µ is uniquely determined by a Sub-Carrier Space (SCS) of a resource pool. (7) If the remaining resources in the S_{A} are less than X*Mₜₒₜₐₗ, then Th(pᵢ, pⱼ) is raised by 3dB and return to step 4; and for a given prio_{TX}, X is configured by the higher-layer parameter *sl-xPercentage(prio_{TX}).* (8) The UE reports the S_{A} to the higher layer. (9) The higher layer randomly selects initial transmission and retransmission resources for the current TB in the S_{A} under a constraint condition that Hybrid Automatic Repeat request (HARQ) RTT is satisfied.

On this basis, in order to solve a resource collision caused by an aperiodic burst service and ensure the reliability of a high-priority service, a Re-evaluation mechanism and a Pre-emption mechanism are respectively added. The re-evaluation mechanism is mainly for resources that have not been reserved, and before the resources are sent, it is determined whether the selected resources collide according to the latest sensing results. If a collision occurs, re-selection may be performed, thereby reducing the probability of resource collision. The pre-emption mechanism is mainly for resources that have been reserved, and if it is found that the reserved resources are pre-empted by a high-priority UE, a low-priority UE is triggered to perform resource re-selection, thereby avoiding collision between high and low priorities, so as to ensure the performance of a high-priority service. As shown in Fig. 4, the initial transmission time is m1, the re-selection time is m2, the start time of re-evaluation is n and the end time is m1-T3, and the start time of pre-emption is m1 and the end time is m2-T3.

The present disclosure provides a method and apparatus for sending a positioning reference signal, and a terminal device, so as to solve the problem in the related art that related information of an SL-PRS does not exist in the sidelink communication.

As shown in Fig. 5, embodiments of the present disclosure provide a method for sending a positioning reference signal, applied to a first device, the method comprising:
step 501: in a first resource pool, a PSCCH and a PSSCH are sent to a second device; wherein, SCI carried on the PSCCH or the PSSCH includes first indication information, and the first indication information is used for indicating related information of an SL-PRS.

It should be noted that the first device is a 3GPP Release 18 (R18) UE.

The first resource pool is a resource pool shared by a 3GPP release 16 (R16) UE and a 3GPP release 17 (R17) UE. That is, in order to implement SL-Positioning technology, sending related information of an SL-PRS in R16 and R17 resource pools is an implementable method, which can save sidelink resources and improve the resource utilization rate.

In some embodiments of the present disclosure, the related information of the SL-PRS includes at least one of the following:
information for indicating whether the SL-PRS is included in the current transmission or not;
information for indicating whether the first device has a sidlelink positioning capability in the first resource pool; and
resource configuration information of the SL-PRS.

In some embodiments of the present disclosure, the first indication information is carried in the reserved bits of the 1st-stage SCI carried on the PSCCH; or the first indication information is carried on the PSSCH in a new 2nd-stage SCI format.

Information for indicating whether the SL-PRS is included in this transmission may be identification information, and the identification information is "1" or "0", wherein "1" represents that the SL-PRS is transmitted together with the PRS, and "0" represents that the PRS is not included in the current slot; in some embodiments of the present disclosure, the identification information is carried by using the reserved bits in the SCI-1A.

In some embodiments of the present disclosure, the first indication information is carried in the reserved bits of the 1st-stage SCI carried on the PSCCH, and may use 1 bit among the reserved bits in the 1st-stage SCI to indicate whether an SL-PRS is carried on this transport block; or may use 2 bits among the reserved bits in the 1st-stage SCI to indicate time domain pattern information and/or frequency domain pattern information of the SL-PRS in this transport block. Specifically, pattern index information corresponding to the SL-PRS in the current transport block may be indicated, and the supportable pattern information set should be configured or pre-configured by higher-layer parameters.

In some embodiments of the present disclosure, a new 2nd-stage SCI format is introduced into the PSSCH, the first indication information carried in the introduced new 2nd-stage SCI format may be used for indicating time frequency resource configuration information, such as SCI format 2-D, and the SCI format 2-D is used for scheduling decoding of the SL-PRS and/or PSSCH.

It should be further noted that, in the embodiments of the present disclosure, a Demodulation Reference Signal (DMRS) or a Channel-State Information Reference Signal (CSI-RS) may be used as the SL-PRS for positioning measurement.

In some embodiments of the present disclosure, when the R18 UE sends the SL-PRS, the overall channel structure should be the same as that of R16, and the information content in the 1st-stage SCI and 2nd-stage SCI formats in the related art is not changed.

In some embodiments of the present disclosure, the SCI further carries priority information, and the priority information includes at least one of the following:
the minimum value of a first priority value and a second priority value; the first priority value is a value corresponding to the priority of the PSSCH, and the second priority value is a value corresponding to the priority of the SL-PRS;
the priority of the PSSCH; and
the priority of the SL-PRS.

A method for determining priority information carried in SCI, comprising at least one of the following:
jointly determining by the priority of the PSSCH and the priority of the SL-PRS, and the minimum value of the priority values of the PSSCH and the SL-PRS is taken as priority information carried in the SCI;
the priority of a PSSCH carried in SCI; and
the priority of an SL-PRS carried in the SCI.

The priority of the SL-PRS is determined according to at least one of the following:
higher-layer parameter configuration;
pre-configuration;
priority information carried by positioning initiation signaling; and
priority information of a corresponding positioning service.

In some embodiments of the present disclosure, in cases where the first device needs to simultaneously process a transport block that carries the SL-PRS and a transport block that does not carry the SL-PRS, the method further comprises at least one of the following:
a transport block with a high priority is preferentially processed according to a comparison result of the first priority and the second priority; and
in cases where the first priority is the same as the second priority, a transport block is randomly selected for processing;
wherein the first priority is a priority corresponding to the transport block that carries the SL-PRS; and
the second priority is a priority corresponding to the transport block that does not carry the SL-PRS.

That is, in cases where the first device needs to simultaneously process a transport block that carries the SL-PRS and a transport block that does not carry the SL-PRS, the first device compares the priority of the transport block that carries the SL-PRS with the priority of the transport block that does not carry the SL-PRS, and preferentially processes the transport block with high priority. If the two are of the same priority, the first device randomly processes one of the transport block that carries the SL-PRS and the transport block that does not carry the SL-PRS.

In some embodiments of the present disclosure, the comparison result of the first priority and the second priority comprises one of the following:
the first priority is higher than the second priority by pre-configured; and
the second priority is higher than the first priority by pre-configured.

In some embodiments of the present disclosure, the case that the first device needs to simultaneously process a transport block that carries the SL-PRS and a transport block that does not carry the SL-PRS comprises at least one of the following:
the first device needs to simultaneously receive the transport block that carries the SL-PRS and receive the transport block that does not carry the SL-PRS;
the first device needs to simultaneously receive the transport block that carries the SL-PRS and send the transport block that does not carry the SL-PRS;
the first device needs to simultaneously send the transport block that carries the SL-PRS and send and receive the transport block that does not carry the SL-PRS; and
the first device needs to simultaneously send the transport block that carries the SL-PRS and receive the transport block that does not carry the SL-PRS.

When the case that the first device needs to simultaneously process a transport block that carries the SL-PRS and a transport block that does not carry the SL-PRS comprises the first device needs to simultaneously receive the transport block that carries the SL-PRS and receive the transport block that does not carry the SL-PRS, the method further comprises at least one of the following:
if the first priority is higher than the second priority by pre-configured, the transport block that carries the SL-PRS is preferentially received;
if the first priority is lower than the second priority by pre-configured, the transport block that does not carry the SL-PRS is preferentially received; and
if the first priority is the same as the second priority, one of the transport block that carries the SL-PRS and the transport block that does not carry the SL-PRS is randomly received;
wherein the first priority is a priority corresponding to the transport block that carries the SL-PRS; and
the second priority is a priority corresponding to the transport block that does not carry the SL-PRS.

When the case that the first device needs to simultaneously process a transport block that carries the SL-PRS and a transport block that does not carry the SL-PRS comprises the first device needs to simultaneously receive the transport block that carries the SL-PRS and send the transport block that does not carry the SL-PRS, the method further comprises at least one of the following:
if the first priority is higher than the second priority by pre-configured, the transport block that carries the SL-PRS is preferentially received;
if the first priority is lower than the second priority by pre-configured, the transport block that does not carry the SL-PRS is preferentially sent;
if the first priority is the same as the second priority, the transport block that carries the SL-PRS is randomly received or the transport block that does not carry the SL-PRS is randomly sent;
wherein the first priority is a priority corresponding to the transport block that carries the SL-PRS; and
the second priority is a priority corresponding to the transport block that does not carry the SL-PRS.

When the case that the first device needs to simultaneously process a transport block that carries the SL-PRS and a transport block that does not carry the SL-PRS comprises the first device needs to simultaneously send the transport block that carries the SL-PRS and send and receive the transport block that does not carry the SL-PRS, the method further comprises at least one of the following:
if the first priority is higher than the second priority by pre-configured, the transport block that carries the SL-PRS is preferentially sent;
if the first priority is lower than the second priority by pre-configured, the transport block that does not carry the SL-PRS is preferentially sent; and
if the first priority is the same as the second priority, one of the transport block that carries the SL-PRS and the transport block that does not carry the SL-PRS is randomly sent;
wherein the first priority is a priority corresponding to the transport block that carries the SL-PRS; and
the second priority is a priority corresponding to the transport block that does not carry the SL-PRS.

When the case that the first device needs to simultaneously process a transport block that carries the SL-PRS and a transport block that does not carry the SL-PRS comprises the first device needs to simultaneously send the transport block that carries the SL-PRS and receive the transport block that does not carry the SL-PRS, the method further comprises at least one of the following:
if the first priority is higher than the second priority by pre-configured, the transport block that carries the SL-PRS is preferentially sent;
if the first priority is lower than the second priority by pre-configured, the transport block that does not carry the SL-PRS is preferentially received; and
if the first priority is the same as the second priority, the transport block that carries the SL-PRS is randomly sent or the transport block that does not carry the SL-PRS is randomly received;
wherein the first priority is a priority corresponding to the transport block that carries the SL-PRS; and
the second priority is a priority corresponding to the transport block that does not carry the SL-PRS.

In some embodiments of the present disclosure, the resource configuration information of the SL-PRS is configured or pre-configured by higher-layer parameters;
wherein the configuration method for the resource configuration information of the SL-PRS comprises at least one of the following:
in cases where the first device and the second device communicate in a unicast manner, the resource configuration information of the SL-PRS is configured via PC5-RRC signaling exchange or pre-configured; and
the resource configuration information of the SL-PRS is based on resource pool configuration or pre-configuration.

In some embodiments of the present disclosure, the resource configuration information of the SL-PRS is configured or pre-configured by higher-layer parameters, wherein the configuration method for the resource configuration information of the SL-PRS comprises at least one of the following:
when the first device and the second device communicate with each other in a unicast manner and the two need to carry out a related interaction process of positioning, PC5-RRC signaling exchange can be performed between the first device and the second device, SL-PRS-related Radio Resource Control (RRC) is re-configured or configured by means of the PC5-RRC exchange, and resource configuration condition of the SL-PRS linked between the first device and the second device is determined; in this case, the resource configuration information of the SL-PRS is only valid between the first device and the second device, and does not affect other devices outside of this link.

When the resource configuration information of the SL-PRS is configured on the basis of the resource pool, the resource configuration information of the SL-PRS is valid for all devices for receiving and sending in the entire resource pool.

In some embodiments of the present disclosure, the resource configuration information of the SL-PRS includes at least one of the following:
priority information of the SL-PRS;
frequency domain resource configuration information of the SL-PRS;
time domain resource configuration information of the SL-PRS;
code domain configuration information of the SL-PRS;
pattern information of time domain symbol positions occupied by the SL-PRS;
resource reservation periods of the SL-PRS;
the number of resource reservation periods of the SL-PRS;
the number of ports of the SL-PRS; and
the offset slot number.

The frequency domain resource configuration information of the SL-PRS comprises at least one of the following:
a start Physical Resource Block (PRB) of the SL-PRS;
a start subchannel position of the SL-PRS;
bandwidth of the SL-PRS;
a comb size of the SL-PRS;
a start resource element (RE) position of the SL-PRS;
a comb offset of the SL-PRS; and
frequency domain pattern information of the SL-PRS.

The time domain resource configuration information of the SL-PRS comprises at least one of the following:
slot positions occupied by the SL-PRS;
a start symbol position of the SL-PRS in a slot; and
the number of symbols occupied by the SL-PRS in the slot.

The code domain configuration information of the SL-PRS comprises at least one of the following:
a cyclic shift of the SL-PRS; and
an orthogonal cover code (OCC) of the SL-PRS.

That is to say, the time domain resource configuration information of the SL-PRS comprises at least one of the following:
HARQ process number;
new data indication;
redundancy version;
source identification (Source ID);
destination identification (Destination ID);
Hybrid Automatic Repeat Request (HARQ) feedback switch indication;
zone identification (Zone ID);
communication range requirements;
priority information of the SL-PRS;
frequency domain resource configuration information of the SL-PRS; and
time domain resource configuration information of the SL-PRS.

If the first resource pool supports the SC-PRS non-continuous mapping on the time domain, the time domain resource configuration information of the SL-PRS further included: pattern information of time domain symbol positions occupied by the SL-PRS supported by the first resource pool;
resource reservation periods of the SL-PRS;
the number of resource reservation periods of the SL-PRS;
the number of ports of the SL-PRS; and
the offset slot number.

The frequency domain resource configuration information of the SL-PRS comprises at least one of the following: a start PRB of the SL-PRS; a start subchannel position of the SL-PRS; bandwidth of the SL-PRS (the number of PRBs or the number of subchannels); a comb size of the SL-PRS; a start RE position of the SL-PRS; a comb offset of the SL-PRS; a cyclic shift of the SL-PRS; an OCC of the SL-PRS; and frequency domain pattern index of the SL-PRS.

The time domain resource configuration information of the SL-PRS comprises at least one of the following: slot positions occupied by the SL-PRS (subframe Num + slot Num); a start symbol position of the SL-PRS in the slot; and the number of symbols occupied by the SL-PRS in the slot.

The positioning scheduling information and time domain interval information of the associated positioning channel need the offset slot number only when cross-slot scheduling is supported.

An SL-PRS time domain pattern and an SL-PRS frequency domain pattern are illustrated below.

The SL-PRS time domain pattern information is relatively similar to PSSCH DMRS pattern information, and is configured or pre-configured by higher-layer parameters; the number of time domain symbols of the SL-PRS and the position of each symbol are as shown in the following table 1:

**Table 1 SL-PRS time domain pattern table**

| Time domain pattern index | Number of time domain symbols of SL-PRS | Positions of time domain symbols of SL-PRS |
|---|---|---|
| 1 | 1 | 3 |
| 2 | 1 | 4 |
| 3 | 2 | 3, 4 |
| ... | | |
| N | X | Time domain position of each of X symbols |

For the SL-PRS frequency domain pattern information:
For illustration of a PRS frequency domain pattern, the PRS frequency domain pattern is information such as a comb size used by the PRS and a start position in each RB on each time domain symbol.

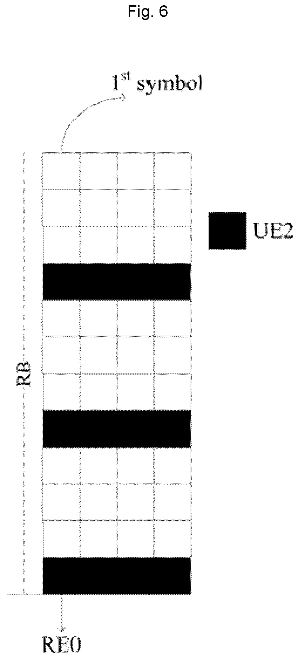

The PRS frequency domain pattern may specifically comprise, but is not limited to: a comb size, a start mapping RE position in each RB of the start symbol, and a mapping comb offset of an RE granularity on each symbol. In cases where it is mapped repeatedly on each symbol, only the RE mapping position in each RB in the frequency domain is required. Please refer to Figs. 3 and 6, as shown UE2 in Fig. 6, for UE1 in Fig. 3, the comb size=4, the start mapping RE position in each RB of the start symbol is index=0, and the RE offset={0,2,1,3} in each symbol.

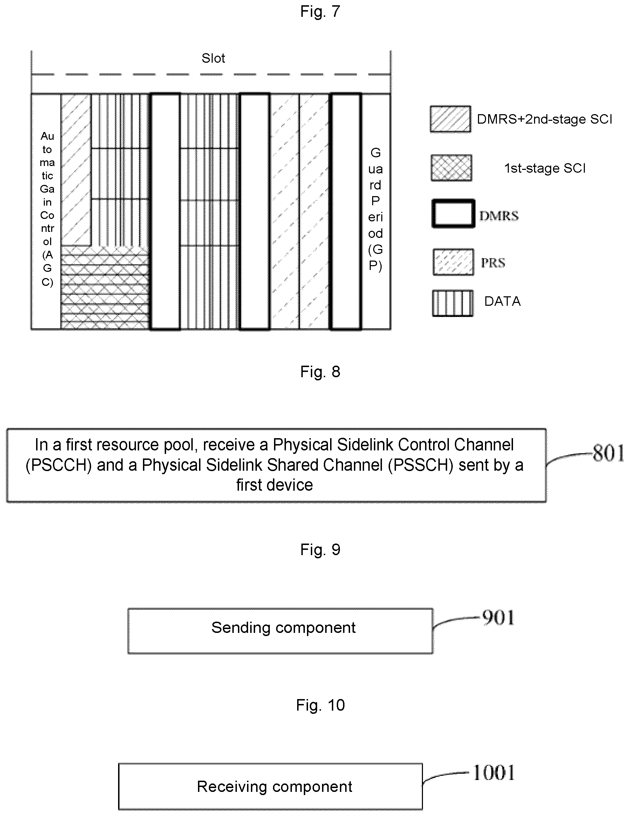

In some embodiments of the present disclosure, referring to Fig. 7, a mapping rule of the SL-PRS comprises at least one of the following:
may not be mapped onto the symbols containing the 1st-stage SCI;
may not be mapped onto the symbols containing the 2nd-stage SCI;
may not be mapped onto the symbols containing a demodulation reference signal (DMRS);
may not be mapped onto automatic gain control (AGC) symbols;
may not be mapped onto guard period (GP) symbols;
may not be mapped onto physical sidelink feedback channel (PSFCH) symbols; and
may be mapped onto arbitrary symbols.

In some embodiments of the present disclosure, the method further comprises:
when resource elements (REs) of the PSSCH are occupied by the SL-PRS, mapping is performed according to at least one of the following:
the PSSCH is mapped onto corresponding REs by puncturing REs occupied by the SL-PRS or the whole symbol occupied by the SL-PRS in the PSSCH;
in cases where the SL-PRS is a DMRS or a CSI-RS, the PSSCH is mapped onto corresponding REs by bypassing, in a rate matching mapping manner, REs occupied by the SL-PRS or the whole symbol occupied by the SL-PRS;
in cases where a first priority value is larger than a second priority value, the SL-PRS is mapped onto the PSSCH; wherein the first priority value is a value corresponding to the priority of the PSSCH, and the second priority value is a value corresponding to the priority of the SL-PRS; and
in cases where the first priority value is greater than a preset threshold value, and the first priority value is greater than the second priority value, the SL-PRS is mapped on the PSSCH; wherein the first priority value is a value corresponding to the priority of the PSSCH, and the second priority value is a value corresponding to the priority of the SL-PRS.

In some embodiments of the present disclosure, the mapping manner for mapping the PSSCH onto the corresponding REs by puncturing REs occupied by the SL-PRS or the whole symbol occupied by the SL-PRS in the PSSCH has better compatibility with R16 and R17.

In cases where a DMRS or a CSI-RS is reused as the SL-PRS for positioning measurement, it needs to be limited that data is not mapped on the DMRS or CSI-RS symbol at this time, and the mapping manner for mapping the PSSCH onto corresponding REs by bypassing, in a rate matching mapping manner, REs occupied by the SL-PRS or the whole symbol occupied by the SL-PRS does not affect the demodulation performance of an R18 UE.

When the priority value of the SL-PRS is smaller than the priority value of the PSSCH, the SL-PRS may be mapped onto the PSSCH.

A priority threshold P (a preset threshold value) is configured or pre-configured by higher-layer parameters, and the SL-PRS can be mapped onto the PSSCH only when the priority value of the PSSCH is greater than P and the priority value of the SL-PRS is smaller than the priority value of the PSSCH.

In some embodiments of the present disclosure, the method further comprises:
a transport block size of the PSSCH is determined according to overhead information of the SL-PRS;
wherein the overhead information of the SL-PRS is determined according to at least one of the following:
   higher-layer parameter configuration;
   pre-configuration; and
   SL-PRS overhead indication information in the SCI.

That is, when a transport block size of the PSSCH is determined, the overhead information of the SL-PRS may be determined according to at least one of the following:
the overhead of the SL-PRS is configured by higher-layer parameters;
the overhead of the SL-PRS is pre-configured; and
the overhead of the SL-PRS is indicated by the SCI (indicated by the SL-PRS overhead indication information in the SCI).

In some embodiments of the present disclosure, the method further comprises:
an initialization sequence of the SL-PRS is generated according to at least one of the following:
Cyclic Redundancy Check bits (CRC bits) of the 1st-stage SCI;
source ID in the 2nd-stage SCI;
destination ID in the 2nd-stage SCI;
a number of a slot where the SL-PRS is located; and
SL-PRS sequence ID (SL-PRS SEQUENCE ID) configured by the higher-layer parameters.

In some embodiments of the present disclosure, the method further comprises:
second indication information sent by the second device is received; and
the first indication information is added, on the basis of the second indication information, to the SCI carried on the PSSCH or the PSCCH;
wherein the second indication information is used for indicating whether the second device has a sidelink positioning capability in a first resource pool.

In some embodiments of the present disclosure, before the first device (R18 UE) sends the PSCCH and the PSSCH to the second device, the first device receives the second indication information sent by the second device, wherein the second indication information is used for indicating whether the second device has the SL-positioning capability in a shared resource pool (the first resource pool), and the first device feeds back the first indication information on the basis of the second indication information.

The method for sending a positioning reference signal provided according to the embodiments of the present disclosure fully takes forward compatibility into account. An R18 sidelink positioning UE does not affect a sensing process of R16 and R17 UEs and a decoding process of a PSSCH. In addition, R16 and R17 resource allocation mechanisms do not need to be changed, thereby ensuring that R18 can operate normally.

As shown in Fig. 8, the embodiments of the present disclosure further provide a method for sending a positioning reference signal, applied to a second device, the method comprising:
step 801: in a first resource pool, a PSCCH and a PSSCH sent by a first device is received; wherein SCI carried on the PSCCH or the PSSCH includes first indication information, and the first indication information is used for indicating related information of an SL-PRS.

According to the embodiments of the present disclosure, a first device sends a PSCCH and a PSSCH to a second device in a first resource pool, adds first indication information into SCI carried on the PSCCH or the PSSCH, which is used for indicating related information of an SL-PRS, so as to introduce related information of the SL-PRS in the sidelink communication in the related art.

The first resource pool is a resource pool shared by a 3GPP release 16 (R16) UE and a 3GPP release 17 (R17) UE. That is, in order to implement SL-Positioning technology, sending related information of an SL-PRS in R16 and R17 resource pools is an implementable method, which can save sidelink resources and improve the resource utilization rate.

In some embodiments of the present disclosure, the related information of the SL-PRS includes at least one of the following:
information for indicating whether the SL-PRS is included in this transmission or not;
information for indicating whether the first device has a sidelink positioning capability in a shared resource pool; and
resource configuration information of the SL-PRS.

In some embodiments of the present disclosure, in cases where the related information of the SL-PRS indicates that the SL-PRS is included in this transmission, the method further comprises at least one of the following:
resource configuration information of the SL-PRS is determined according to the SCI;
resource configuration information of the SL-PRS is determined according to higher-layer parameters; and
resource configuration information of the SL-PRS is determined according to pre-configured parameters.

That is, if the SL-PRS is carried in the SCI, the method for determining the resource configuration information of the SL-PRS comprises at least one of the following:
resource configuration information of the SL-PRS is determined according to the SCI;
resource configuration information of the SL-PRS is determined according to higher-layer parameters; and
resource configuration information of the SL-PRS is determined according to pre-configured parameters.

In some embodiments of the present disclosure, before the PSCCH and the PSSCH sent by the first device are received in the first resource pool, the method further comprises:
second indication information is sent to the first device, so that the first device adds, on the basis of the second indication information, the first indication information into the SCI carried on the PSCCH or the PSSCH; and
wherein the second indication information is used for indicating whether the second device has a sidelink positioning capability in the first resource pool.

In some embodiments of the present disclosure, before the first device (R18 UE) sends the PSCCH and the PSSCH to the second device, the first device receives the second indication information sent by the second device, wherein the second indication information is used for indicating whether the second device has the SL-positioning capability in a shared resource pool (the first resource pool), and the first device feeds back the first indication information on the basis of the second indication information.

As shown in Fig. 9, the embodiments of the present disclosure further provide an apparatus for sending a positioning reference signal, applied to a first device, the apparatus comprising:
a sending component 901, configured to send a PSCCH and a PSSCH to a second device in a first resource pool; wherein SCI carried on the PSCCH or the PSSCH includes first indication information, and the first indication information is used for indicating related information of an SL-PRS.

In some embodiments of the present disclosure, the related information of the SL-PRS includes at least one of the following:
information for indicating whether the SL-PRS is included in the current transmission or not;
information for indicating whether the first device has a sidelink positioning capability in the first resource pool; and
resource configuration information of the SL-PRS.

In some embodiments of the present disclosure, the SCI further carries priority information, and the priority information includes at least one of the following:
the minimum value of a first priority value and a second priority value; the first priority value is a value corresponding to the priority of the PSSCH, and the second priority value is a value corresponding to the priority of the SL-PRS;
the priority of the PSSCH; and
the priority of the SL-PRS.

In some embodiments of the present disclosure, the priority of the SL-PRS is determined according to at least one of the following:
higher-layer parameter configuration;
pre-configuration;
priority information carried by positioning initiation signaling; and
priority information of a corresponding positioning service.

In some embodiments of the present disclosure, when the first device needs to simultaneously process a transport block that carries the SL-PRS and a transport block that does not carry the SL-PRS, the apparatus further comprises: a first processing component;
the first processing component is configured to perform at least one of the following:
preferentially process a transport block with a high priority according to a comparison result of the first priority and the second priority; and
in cases where the first priority is the same as the second priority, randomly select a transport block for processing;
wherein the first priority is a priority corresponding to the transport block that carries the SL-PRS; and
the second priority is a priority corresponding to the transport block that does not carry the SL-PRS.

In some embodiments of the present disclosure, the comparison result of the first priority and the second priority comprises one of the following:
the first priority is higher than the second priority by pre-configured; and
the second priority is higher than the first priority by pre-configured.

In some embodiments of the present disclosure, the resource configuration information of the SL-PRS is configured or pre-configured by higher-layer parameters;
wherein the configuration method for the resource configuration information of the SL-PRS comprises at least one of the following:
in cases where the first device and the second device communicate in a unicast manner, the resource configuration information of the SL-PRS is configured via PC5-RRC signaling exchange or pre-configured; and
the resource configuration information of the SL-PRS is based on resource pool configuration or pre-configuration.

In some embodiments of the present disclosure, the resource configuration information of the SL-PRS includes at least one of the following:
priority information of the SL-PRS;
frequency domain resource configuration information of the SL-PRS;
time domain resource configuration information of the SL-PRS;
code domain configuration information of the SL-PRS;
pattern information of time domain symbol positions occupied by the SL-PRS;
resource reservation periods of the SL-PRS;
the number of resource reservation periods of the SL-PRS;
the number of ports of the SL-PRS; and
the offset slot number.

In some embodiments of the present disclosure, the frequency domain resource configuration information of the SL-PRS includes at least one of the following:
a start Physical Resource Block (PRB) of the SL-PRS;
a start subchannel position of the SL-PRS;
bandwidth of the SL-PRS;
a comb size of the SL-PRS;
a start resource element (RE) position of the SL-PRS;
a comb offset of the SL-PRS; and
frequency domain pattern information of the SL-PRS.

In some embodiments of the present disclosure, the time domain resource configuration information of the SL-PRS includes at least one of the following:
slot positions occupied by the SL-PRS;
a start symbol position of the SL-PRS in a slot; and
the number of symbols occupied by the SL-PRS in the slot.

In some embodiments of the present disclosure, the code domain configuration information of the SL-PRS includes at least one of the following:
a cyclic shift of the SL-PRS; and
an orthogonal cover code (OCC) of the SL-PRS.

In some embodiments of the present disclosure, the mapping rule of the SL-PRS comprises at least one of the following:
may not be mapped onto the symbols containing the 1st-stage SCI;
may not be mapped onto the symbols containing the 2nd-stage SCI;
may not be mapped onto the symbols containing a demodulation reference signal (DMRS);
may not be mapped onto automatic gain control (AGC) symbols;
may not be mapped onto guard period (GP) symbols;
may not be mapped onto physical sidelink feedback channel (PSFCH) symbols; and
may be mapped onto arbitrary symbols.

In some embodiments of the present disclosure, the apparatus further comprises:
a mapping component, configured to, when REs of the PSSCH are occupied by the SL-PRS, perform mapping according to at least one of the following:
the PSSCH is mapped onto corresponding REs by puncturing REs occupied by the SL-PRS or the whole symbol occupied by the SL-PRS in the PSSCH;
in cases where the SL-PRS is a DMRS or a CSI-RS, the PSSCH is mapped onto corresponding REs by bypassing, in a rate matching mapping manner, REs occupied by the SL-PRS or the whole symbol occupied by the SL-PRS;
in cases where a first priority value is larger than a second priority value, the SL-PRS is mapped onto the PSSCH; wherein the first priority value is a value corresponding to the priority of the PSSCH, and the second priority value is a value corresponding to the priority of the SL-PRS; and
in cases where the first priority value is greater than a preset threshold value, and the first priority value is greater than the second priority value, the SL-PRS is mapped on the PSSCH; wherein the first priority value is a value corresponding to the priority of the PSSCH, and the second priority value is a value corresponding to the priority of the SL-PRS.

In some embodiments of the present disclosure, the apparatus further comprises:
a first determination component, configured to determine a transport block size of the PSSCH according to overhead information of the SL-PRS;
wherein the overhead information of the SL-PRS is determined according to at least one of the following:
   higher-layer parameter configuration;
   pre-configuration; and
   SL-PRS overhead indication information in the SCI.

In some embodiments of the present disclosure, the apparatus further comprises:
a second processing component, configured to generate an initialization sequence of the SL-PRS according to at least one of the following:
cyclic redundancy check bits of the 1st-stage SCI;
source ID in the 2nd-stage SCI;
destination ID in the 2nd-stage SCI;
a number of a slot where the SL-PRS is located; and
SL-PRS SEQUENCE ID configured by the higher-layer parameters.

In some embodiments of the present disclosure, the apparatus further comprises:
an information receiving component, configured to receive second indication information sent by the second device; and
a third processing component, configured to add**,** on the basis of the second indication information, the first indication information into the SCI carried on the PSSCH or the PSCCH;
wherein the second indication information is used for indicating whether the second device has a sidelink positioning capability in the first resource pool.

It should be noted that the apparatus for sending a positioning reference signal applied to a first device provided according to the embodiments of the present disclosure is an apparatus capable of executing the above method for sending a positioning reference signal applied to a first device, and thus all the embodiments of the above method for sending a positioning reference signal applied to a first device are applicable to the apparatus and can achieve the same or similar technical effect.

As shown in Fig. 10, the embodiments of the present disclosure further provide an apparatus for sending a positioning reference signal, applied to a second device, the apparatus comprising:
a receiving component 1001, configured to receive, in a first resource pool, a PSCCH and a PSSCH sent by a first device; wherein SCI carried on the PSCCH or the PSSCH includes first indication information, and the first indication information is used for indicating related information of an SL-PRS.

In some embodiments of the present disclosure, the related information of the SL-PRS includes at least one of the following:
information for indicating whether the SL-PRS is included in this transmission or not;
information for indicating whether the first device has a sidelink positioning capability in a shared resource pool; and
resource configuration information of the SL-PRS.

In some embodiments of the present disclosure, in cases where the related information of the SL-PRS indicates that the SL-PRS is included in this transmission, the apparatus further comprises: a second determination component;
the second determination component is configured to:
determine resource configuration information of the SL-PRS according to the SCI;
determine resource configuration information of the SL-PRS according to higher-layer parameters; and
determine resource configuration information of the SL-PRS according to pre-configured parameters.

In some embodiments of the present disclosure, the apparatus further comprises:
an information sending component, configured to send second indication information to the first device, so that the first device adds, on the basis of the second indication information, the first indication information into the SCI carried on the PSCCH or the PSSCH;
wherein the second indication information is used for indicating whether the second device has a sidelink positioning capability in the first resource pool.

It should be noted that the apparatus for sending a positioning reference signal applied to a second device provided according to the embodiments of the present disclosure is an apparatus capable of executing the above method for sending a positioning reference signal applied to a second device, and thus all the embodiments of the above method for sending a positioning reference signal applied to a second device are applicable to the apparatus and can achieve the same or similar technical effect.

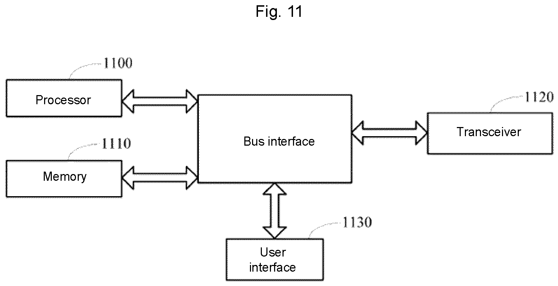

As shown in Fig. 11, the embodiments of the present disclosure further provide a terminal device, wherein the terminal device is a first device, comprising: a processor 1100; and a memory 1110 connected to the processor 1100 by means of a bus interface. The memory 1110 is configured to store programs and data that are used by the processor 1100 when performing operations, and the processor 1100 invokes and executes the programs and data stored in the memory 1110.

The terminal device further comprises a transceiver 1120, the transceiver 1120 being connected to the bus interface and configured to receive and send data under the control of the processor 1100.

In some embodiments of the present disclosure, the transceiver 1120 performs the following process:
in a first resource pool, sending a PSCCH and a PSSCH to a second device; wherein, SCI carried on the PSCCH or the PSSCH includes first indication information, and the first indication information is used for indicating related information of an SL-PRS.

In some embodiments of the present disclosure, the related information of the SL-PRS includes at least one of the following:
information for indicating whether the SL-PRS is included in the current transmission or not;
information for indicating whether the first device has a sidelink positioning capability in the first resource pool; and
resource configuration information of the SL-PRS.

In some embodiments of the present disclosure, the SCI further carries priority information, and the priority information includes at least one of the following:
the minimum value of a first priority value and a second priority value; the first priority value is a value corresponding to the priority of the PSSCH, and the second priority value is a value corresponding to the priority of the SL-PRS;
the priority of the PSSCH; and
the priority of the SL-PRS.

In some embodiments of the present disclosure, the priority of the SL-PRS is determined according to at least one of the following:
higher-layer parameter configuration;
pre-configuration;
priority information carried by positioning initiation signaling; and
priority information of a corresponding positioning service.

In some embodiments of the present disclosure, in cases where the first device needs to simultaneously process a transport block that carries the SL-PRS and a transport block that does not carry the SL-PRS, the processor 1100 is configured to:
preferentially process a transport block with a high priority according to a comparison result of the first priority and the second priority; and
in cases where the first priority is the same as the second priority, randomly select a transport block for processing;
wherein the first priority is a priority corresponding to the transport block that carries the SL-PRS; and
the second priority is a priority corresponding to the transport block that does not carry the SL-PRS.

In some embodiments of the present disclosure, the comparison result of the first priority and the second priority comprises one of the following:
the first priority is higher than the second priority by pre-configured; and
the second priority is higher than the first priority by pre-configured.

In some embodiments of the present disclosure, the resource configuration information of the SL-PRS is configured or pre-configured by higher-layer parameters;
wherein the configuration method for the resource configuration information of the SL-PRS comprises at least one of the following:
in cases where the first device and the second device communicate in a unicast manner, the resource configuration information of the SL-PRS is configured via PC5-RRC signaling exchange or pre-configured; and
the resource configuration information of the SL-PRS is based on resource pool configuration or pre-configuration.

In some embodiments of the present disclosure, the resource configuration information of the SL-PRS includes at least one of the following:
priority information of the SL-PRS;
frequency domain resource configuration information of the SL-PRS;
time domain resource configuration information of the SL-PRS;
code domain configuration information of the SL-PRS;
pattern information of time domain symbol positions occupied by the SL-PRS;
resource reservation periods of the SL-PRS;
the number of resource reservation periods of the SL-PRS;
the number of ports of the SL-PRS; and
the offset slot number.

In some embodiments of the present disclosure, the frequency domain resource configuration information of the SL-PRS includes at least one of the following:
a start Physical Resource Block (PRB) of the SL-PRS;
a start subchannel position of the SL-PRS;
bandwidth of the SL-PRS;
a comb size of the SL-PRS;
a start resource element (RE) position of the SL-PRS;
a comb offset of the SL-PRS; and
frequency domain pattern information of the SL-PRS.

In some embodiments of the present disclosure, the time domain resource configuration information of the SL-PRS includes at least one of the following:
slot positions occupied by the SL-PRS;
a start symbol position of the SL-PRS in a slot; and
the number of symbols occupied by the SL-PRS in the slot.

In some embodiments of the present disclosure, the code domain configuration information of the SL-PRS includes at least one of the following:
a cyclic shift of the SL-PRS; and
an orthogonal cover code (OCC) of the SL-PRS.

In some embodiments of the present disclosure, the mapping rule of the SL-PRS comprises at least one of the following:
may not be mapped onto the symbols containing the 1st-stage SCI;
may not be mapped onto the symbols containing the 2nd-stage SCI;
may not be mapped onto the symbols containing a demodulation reference signal (DMRS);
may not be mapped onto automatic gain control (AGC) symbols;
may not be mapped onto guard period (GP) symbols;
may not be mapped onto physical sidelink feedback channel (PSFCH) symbols; and
may be mapped onto arbitrary symbols.

In some embodiments of the present disclosure, the processor 1100 is further configured to:
when resource elements (REs) of the PSSCH are occupied by the SL-PRS, perform mapping according to at least one of the following:
map the PSSCH onto corresponding REs by puncturing REs occupied by the SL-PRS or the whole symbol occupied by the SL-PRS in the PSSCH;
in cases where the SL-PRS is a DMRS or a CSI-RS, map the PSSCH onto corresponding REs by bypassing, in a rate matching mapping manner, REs occupied by the SL-PRS or the whole symbol occupied by the SL-PRS;
map the SL-PRS onto the PSSCH in cases where a first priority value is larger than a second priority value; wherein the first priority value is a value corresponding to the priority of the PSSCH, and the second priority value is a value corresponding to the priority of the SL-PRS; and
map the SL-PRS onto the PSSCH in cases where the first priority value is greater than a preset threshold value, and the first priority value is greater than the second priority value; wherein the first priority value is a value corresponding to the priority of the PSSCH, and the second priority value is a value corresponding to the priority of the SL-PRS.

In some embodiments of the present disclosure, the processor 1100 is further configured to:
determine a transport block size of the PSSCH according to overhead information of the SL-PRS;
wherein the overhead information of the SL-PRS is determined according to at least one of the following:
   higher-layer parameter configuration;
   pre-configuration; and
   SL-PRS overhead indication information in the SCI.

In some embodiments of the present disclosure, the processor 1100 is further configured to:
generate an initialization sequence of the SL-PRS according to at least one of the following:
cyclic redundancy check bits of the 1st-stage SCI;
source ID in the 2nd-stage SCI;
destination ID in the 2nd-stage SCI;
a number of a slot where the SL-PRS is located; and
SL-PRS SEQUENCE ID configured by the higher-layer parameters.

In some embodiments of the present disclosure, the transceiver 1120 is further configured to:
receive second indication information sent by the second device.

The processor 1100 is further configured to:
on the basis of the second indication information, add the first indication information into the SCI carried on the PSSCH or the PSCCH;
wherein the second indication information is used for indicating whether the second device has a sidelink positioning capability in the first resource pool.

In Fig. 11, the bus architecture may include any number of interconnected buses and bridges, which are specifically linked together by various circuitry of one or more processors represented by the processor 1100 and a memory represented by the memory 1110. The bus architecture may also link a variety of other circuitry, such as peripheral devices, voltage regulators and power management circuitry, which are well known in the art and therefore will not be further described herein. The bus interface is provided with a user interface 1130. The transceiver 1120 may be a plurality of elements, i.e. comprising a sender and a receiver, that provide a unit for communicating with various other apparatuses over a transmission medium. The processor 1100 is responsible for managing the bus architecture and general processing, and the memory 1110 may store data used by the processor 1100 when performing operations.

The embodiments of the present disclosure further provide a terminal device, wherein the terminal device is a second device, comprising: a processor; and a memory connected to the processor by means of a bus interface. The memory is configured to store programs and data that are used by the processor when performing operations, and the processor invokes and executes the programs and data stored in the memory.

The terminal device further comprises a transceiver, the transceiver being connected to the bus interface and configured to receive and send data under the control of the processor.

It should be noted that, the structure of the terminal device (the second device) provided in the present disclosure is similar to that of the terminal device (the first device) as shown in Fig. 11.

In some embodiments of the present disclosure, the transceiver performs the following process:
in a first resource pool, receiving a PSCCH and a PSSCH sent by a first device; wherein SCI carried on the PSCCH or the PSSCH includes first indication information, and the first indication information is used for indicating related information of an SL-PRS.

In some embodiments of the present disclosure, the related information of the SL-PRS includes at least one of the following:
information for indicating whether the SL-PRS is included in this transmission or not;
information for indicating whether the first device has a sidelink positioning capability in a shared resource pool; and
resource configuration information of the SL-PRS.

In some embodiments of the present disclosure, in cases where the related information of the SL-PRS indicates that the SL-PRS is included in this transmission, the processor is further configured to perform at least one of the following:
resource configuration information of the SL-PRS is determined according to the SCI;
resource configuration information of the SL-PRS is determined according to higher-layer parameters; and
resource configuration information of the SL-PRS is determined according to pre-configured parameters.

In some embodiments of the present disclosure, before the PSCCH and the PSSCH sent by the first device are received in the first resource pool, the transceiver is further configured to:
send second indication information to the first device, so that the first device adds, on the basis of the second indication information, the first indication information into the SCI carried on the PSCCH or the PSSCH; and
wherein the second indication information is used for indicating whether the second device has a sidelink positioning capability in the first resource pool.

Additionally, the embodiments of the present disclosure further provide a readable storage medium, wherein the readable storage medium stores a program which, when executed by a processor, implements the steps of the method for sending a positioning reference signal applied to a first device according to any one of the forgoing embodiments, or the steps of the method for sending a positioning reference signal applied to a second device according to any one of the forgoing embodiments.

In the several embodiments provided in the present disclosure, it should be understood that the disclosed method and apparatus may be implemented in other manners. For example, the apparatus embodiments described above are merely exemplary. For example, the division of units is merely a logical function division, and in practical applications, there can be another division approach, for example, a plurality of units or components can be combined or integrated into another system; or some features may be ignored or not executed. Further, the displayed or discussed mutual couplings or direct couplings or communication connections may be implemented by the indirect couplings or communication connections between some interfaces, apparatuses or units, and may be implemented in electronic, mechanical, or other forms.

Additionally, various functional units in the embodiments of the present disclosure may be integrated in one processing unit, or each unit may also physically exist separately, or two or more units may be integrated in one unit. The integrated unit above may be implemented in the form of hardware, or may be implemented in the form of a hardware and software functional unit.

The integrated unit implemented in the form of software functional units may be stored in a computer-readable storage medium. The software functional units above are stored in a storage medium, and comprise several instructions for instructing a computer device (which may be a personal computer, a server, or a network device, etc.) to perform some of the steps of the transceiving method according to the embodiments of the present disclosure. Moreover, the storage medium above comprises: various media that can store program codes, such as a USB flash disk, a removable hard disk, a Read-Only Memory (ROM), a Random Access Memory (RAM), a magnetic disk, or an optical disc.

The above are the preferred embodiments of the present disclosure, and it should be pointed out that for a person of ordinary skill in the art, several improvements and modifications can be further made without departing from the principle of the present disclosure, and these improvements and modifications also fall within the scope of protection of the present disclosure.

## Claims

1. A method for sending a positioning reference signal, applied to a first device, the method comprising:
sending a Physical Sidelink Control Channel (PSCCH) and a Physical Sidelink Shared Channel (PSSCH) to a second device in a first resource pool; wherein, Sidelink Control Information (SCI) carried on the PSCCH or the PSSCH includes first indication information, and the first indication information is used for indicating related information of a Sidelink Positioning Reference Signal (SL-PRS).

2. The method for sending the positioning reference signal as claimed in claim 1, wherein the related information of the SL-PRS includes at least one of the following:
information for indicating whether the SL-PRS is included in this transmission or not;
information for indicating whether the first device has a capability of sidelink positioning in the first resource pool; and
resource configuration information of the SL-PRS.

3. The method for sending the positioning reference signal as claimed in claim 1, wherein the SCI further carries priority information, and the priority information comprises at least one of the following:
a minimum value of a first priority value and a second priority value; the first priority value is a value corresponding to a priority of the PSSCH, and the second priority value is a value corresponding to a priority of the SL-PRS;
the priority of the PSSCH; and
the priority of the SL-PRS.

4. The method for sending the positioning reference signal as claimed in claim 3, wherein the priority of the SL-PRS is determined according to at least one of the following:
higher-layer parameter configuration;
pre-configuration; and
priority information carried by positioning initiation signaling; and
priority information of a corresponding positioning service.

5. The method for sending the positioning reference signal as claimed in claim 1, wherein in a case that the first device needs to simultaneously process a transport block that carries the SL-PRS and a transport block that does not carry the SL-PRS, the method further comprises at least one of the following:
preferentially processing a transport block with high priority according to a comparison result of the first priority and the second priority; and
in cases where the first priority is the same as the second priority, randomly selecting a transport block for processing;
wherein the first priority is a priority corresponding to a transport block that carries the SL-PRS; and
the second priority is a priority corresponding to a transport block that does not carry the SL-PRS.

6. The method for sending the positioning reference signal as claimed in claim 5, wherein the comparison result of the first priority and the second priority comprises one of the following:
the first priority is higher than the second priority by pre-configured; and
the second priority is higher than the first priority by pre-configured.

7. The method for transmitting the positioning reference signal as claimed in claim 2, wherein the resource configuration information of the SL-PRS is configured or pre-configured by higher-layer parameters;
wherein a configuration method for the resource configuration information of the SL-PRS comprises at least one of the following:
in cases where the first device and the second device communicate in a unicast manner, the resource configuration information of the SL-PRS is configured via PC5-RRC signaling exchange or pre-configured; and
the resource configuration information of the SL-PRS is based on resource pool configuration or pre-configuration.

8. The method for sending the positioning reference signal as claimed in claim 2, wherein the resource configuration information of the SL-PRS includes at least one of the following:
priority information of the SL-PRS;
frequency domain resource configuration information of the SL-PRS;
time domain resource configuration information of the SL-PRS;
code domain configuration information of the SL-PRS;
pattern information of time domain symbol positions occupied by the SL-PRS;
resource reservation periods of the SL-PRS;
the number of resource reservation periods of the SL-PRS;
the number of ports of the SL-PRS; and
the offset slot number.

9. The method for sending the positioning reference signal as claimed in claim 8, wherein the frequency domain resource configuration information of the SL-PRS comprises at least one of the following:
a start Physical Resource Block (PRB) of the SL-PRS;
a start subchannel position of the SL-PRS;
bandwidth of the SL-PRS;
a comb size of the SL-PRS;
a start resource element (RE) position of the SL-PRS;
a comb offset of the SL-PRS; and
frequency domain pattern information of the SL-PRS.

10. The method for transmitting the positioning reference signal as claimed in claim 8, wherein the time domain resource configuration information of the SL-PRS comprises at least one of the following:
slot positions occupied by the SL-PRS;
a start symbol position of the SL-PRS in a slot; and
the number of symbols occupied by the SL-PRS in the slot.

11. The method for transmitting the positioning reference signal as claimed in claim 8, wherein the code domain configuration information of the SL-PRS comprises at least one of the following:
a cyclic shift of the SL-PRS; and
an Orthogonal Cover Code (OCC) of the SL-PRS.

12. The method for sending the positioning reference signal as claimed in claim 8, wherein a mapping rule of the SL-PRS comprises at least one of the following:
can not be mapped onto symbols containing 1st-stage SCI;
can not be mapped onto symbols containing 2nd-stage SCI;
can not be mapped onto symbols containing a Demodulation Reference Signal (DMRS);
can not be mapped onto Automatic Gain Control (AGC) symbols;
can not be mapped onto Guard Period (GP) symbols;
can not be mapped onto Physical Sidelink Feedback Channel (PSFCH) symbols; and
can be mapped onto arbitrary symbols.

13. The method for sending the positioning reference signal as claimed in claim 1, wherein the method further comprises:
when resource elements (REs) of the PSSCH are occupied by the SL-PRS, performing mapping according to at least one of the following:
mapping the PSSCH onto corresponding REs by puncturing REs occupied by the SL-PRS or the whole symbol occupied by the SL-PRS in the PSSCH;
in cases where the SL-PRS is a Demodulation Reference Signal (DMRS) or a Channel-State Information Reference Signal (CSI-RS), mapping the PSSCH onto corresponding REs by bypassing, in a rate matching mapping manner, REs occupied by the SL-PRS or the whole symbol occupied by the SL-PRS;
in cases where a first priority value is larger than a second priority value, mapping the SL-PRS onto the PSSCH; wherein the first priority value is a value corresponding to a priority of the PSSCH, and the second priority value is a value corresponding to a priority of the SL-PRS; and
in cases where the first priority value is greater than a preset threshold value, and the first priority value is greater than the second priority value, mapping the SL-PRS onto the PSSCH; wherein the first priority value is a value corresponding to the priority of the PSSCH, and the second priority value is a value corresponding to the priority of the SL-PRS.

14. The method for sending the positioning reference signal as claimed in claim 1, wherein the method further comprises:
determining a transport block size of the PSSCH according to overhead information of the SL-PRS;
wherein the overhead information of the SL-PRS is determined according to at least one of the following:
higher-layer parameter configuration;
pre-configuration; and
SL-PRS overhead indication information in the SCI.

15. The method for sending the positioning reference signal as claimed in claim 1, wherein the method further comprises:
generating an initialization sequence of the SL-PRS according to at least one of the following:
cyclic redundancy check bits of 1st-stage SCI;
source ID in 2nd-stage SCI;
destination ID in the 2nd-stage SCI;
a number of a slot where the SL-PRS is located; and
SL-PRS SEQUENCE ID configured by higher-layer parameters.

16. The method for sending the positioning reference signal as claimed in claim 1, wherein the method further comprises:
receiving second indication information sent by the second device; and
on the basis of the second indication information, adding the first indication information into the SCI carried on the PSSCH or the PSCCH;
wherein the second indication information is used for indicating whether the second device has a capability of sidelink positioning in the first resource pool.

17. A method for sending a positioning reference signal, applied to a second device, the method comprising:
in a first resource pool, receiving a Physical Sidelink Control Channel (PSCCH) and a Physical Sidelink Shared Channel (PSSCH) sent by a first device; wherein Sidelink Control Information (SCI) carried on the PSCCH or the PSSCH includes first indication information, and the first indication information is used for indicating related information of a Sidelink Positioning Reference Signal (SL-PRS).

18. The method for sending the positioning reference signal as claimed in claim 17, wherein the related information of the SL-PRS includes at least one of the following:
information for indicating whether the SL-PRS is included in this transmission or not;
information for indicating whether the first device has a capability of sidelink positioning in a shared resource pool; and
resource configuration information of the SL-PRS.

19. The method for sending the positioning reference signal as claimed in claim 17, wherein in a case that the related information of the SL-PRS indicates that the SL-PRS is included in this transmission, the method further comprises at least one of the following:
determining resource configuration information of the SL-PRS according to the SCI;
determining resource configuration information of the SL-PRS according to higher-layer parameters; and
determining resource configuration information of the SL-PRS according to pre-configured parameters.

20. The method for sending the positioning reference signal as claimed in claim 17, wherein before receiving, in the first resource pool, the Physical Sidelink Control Channel (PSCCH) and the Physical Sidelink Shared Channel (PSSCH) sent by the first device, the method further comprises:
sending second indication information to the first device, so that the first device adds, on the basis of the second indication information, the first indication information into the SCI carried on the PSCCH or the PSSCH; and
wherein the second indication information is used for indicating whether the second device has a capability of sidelink positioning in the first resource pool.

21. An apparatus for sending a positioning reference signal, applied to a first device, the apparatus comprising:
a sending component, configured to send a Physical Sidelink Control Channel (PSCCH) and a Physical Sidelink Shared Channel (PSSCH) in a first resource pool; wherein Sidelink Control Information (SCI) carried on the PSCCH or the PSSCH includes first indication information, and the first indication information is used for indicating related information of a Sidelink Positioning Reference Signal (SL-PRS).

22. An apparatus for sending a positioning reference signal, applied to a second device, the apparatus comprising:
a receiving component, configured to receive, in a first resource pool, a Physical Sidelink Control Channel (PSCCH) and a Physical Sidelink Shared Channel (PSSCH) sent by a first device; wherein Sidelink Control Information (SCI) carried on the PSCCH or the PSSCH includes first indication information, and the first indication information is used for indicating related information of a Sidelink Positioning Reference Signal (SL-PRS).

23. A terminal device, wherein the terminal device is a first device, comprising: a processor, a memory, and a program stored on the memory and capable of running on the processor, wherein the program, when executed by the processor, implements the steps of the method for sending a positioning reference signal as claimed in any one of claims 1 to 16.

24. A terminal device, wherein the terminal device is a second device, comprising: a processor, a memory, and a program stored on the memory and capable of running on the processor, wherein the program, when executed by the processor, implements the steps of the method for sending a positioning reference signal as claimed in any one of claims 17 to 20.

25. A readable storage medium, on which a program is stored, wherein the program, when executed by a processor, implements the steps of the method for sending a positioning reference signal as claimed in any one of claims 1 to 16, or the steps of the method for sending a positioning reference signal as claimed in any one of claims 17 to 20.
